# EUROPEAN PATENT SPECIFICATION

(11) **EP 2 550 859 B1**
(45) Date of publication and mention of the grant of the patent: **06.09.2017**
(21) Application number: 12005350.9
(22) Date of filing: 23.07.2012
(51) Int. Cl.: A01J 5/04

(54) **Gripping device for a milking unit**
Greifvorrichtung für eine Melkeinheit
Dispositif de préhension pour unité de traite

(30) Priority: 28.07.2011 IT MI20111414
(43) Date of publication of application: 30.01.2013
(73) Proprietor: MILKLINE S.r.l., 29027 Podenzano (PC) (IT)
(72) Inventor: Serafini, Massimo, 29027 Podenzano (PC) (IT)
(74) Representative: Lecce, Giovanni

(56) References cited:
- WO-A1-2007/129888
- DE-U- 6 604 310
- US-A- 730 119
- US-A- 1 686 115
- US-A- 4 655 492
- US-A- 4 907 535
- US-A- 5 960 738
- US-A1- 2004 144 016

## Description

The present invention relates to a milking unit used for the mechanised collection of milk from livestock of various kinds such as cattle, sheep and goats.

Mechanised milking has considerable advantages compared to traditional hand milking in that it improves the collection process of the milk enabling the operator to increase milking capacity in terms of the livestock treatable with a single milking device, reducing stress to the animal and thereby improving the quality of the milk and complying with the hygiene and health parameters of the sector.

The devices used for automated/mechanised milking comprise two or four shells fitted with teat-cups to be connected to the udders of the animal, a manifold for collecting the milk, a tube conveying the milk present in the manifold to the recipients or containers and a further tube, called a pulse tube, connected to a pump suitable for aspirating air to create negative pressure or a vacuum (not continuously actuated but intermittently) needed to permit the output of milk from the udders to which the shells or teat-cups are connected.

In order to improve and optimise the mechanised/automated milking process further with a view to causing as little stress as possible to the animal and thereby guarantee good quality of the milk, an application solution has been developed defined by a milking device of the single quarter udder type in which the pulsing vacuum action is applied to the single shell; such devices are also provided with sensors which transmit to a control unit the signals coming from each single udder quarter (such as the signals relative to the electric conductivity of the milk, important for preventing any intra-udder inflammation or mastitis) and needed to control the functioning of each single udder quarter as well as the health of the animal milked.

According to such technology, each shell is independent of the others and has a dedicated line or duct for the application of the negative pressure or vacuum.

In addition, in such type of device the pulse tube may comprise the channels which take the vacuum to the shells and the cable which transmits the signals detected by the sensor to the control unit may be positioned outside the pulse tube or run inside the same. Said pulse tube is generally made in extruded rubber.

The pulse tube, whether of the type used for traditional mechanised or single udder quarter milking, is rigid and rather cumbersome as regards size and the milking operator grasps it with a hand so as to position or connect the shells to the animal's udders.

However, such configuration has a drawback related to the fact that the operator does not grasp the pulse tube in a specific point or area and consequently such grip is uncomfortable, insecure and such as to possibly determine the inopportune falling of the milking unit and damage thereof.

The same is true in the case in which the operator, rather than grasping the milking unit by the pulse tube, grasps the manifold.

A further drawback is represented by the fact that the operator, so as to prevent fluke falling of the milking unit during the positioning step, adopts unnatural and awkward stances detracting from optimal working conditions and painful to the animal.

A further drawback is represented by the difficulty encountered by the operator in the case of replacing the milking unit or sensors. In fact, the cable connecting the sensor and the control unit is usually about two metres long and, in any case, equal to the distance between the sensor and the control unit.

In the case, for example, of the substitution of a sensor, with the connection cable running inside the pulse tube, said cable would need to be extracted for the entire length of the pulse tube and reinserted therein during the assembly phase of the replacement sensor or milking unit; such operation, as well as being difficult on account of the friction between the cable and the pulse tube, also takes up a considerable amount of time and therefore causes an increase in costs.

US 4 907 535 discloses a milk-clawfor collecting the milk sucked from cow's teats through teat cup liners and sending it to a vacuum milking machines. The device discloses neither a real grip nor means for a quick replacement and maintenance of the device.

The purpose of the present invention is to provide a milking unit comprising a gripping device_which enables the operator to grip said unit with an accurate, firm and safe grip.

A further purpose of the present invention is to permit the positioning of the milking unit in an easy and accurate manner avoiding unnatural stances of the operator.

A further purpose of the present invention is to make the maintenance and/or replacement of components of the milking unit or of the milking unit itself fast and easy

A further purpose of the present invention is to provide a milking unit suitable for ensuring a high level of resistance and reliability over time and, in addition, such as to be easily and economically produced.

These and further purposes are achieved the milking unit as claimed in claim1. Further advantageous feature are recited in the dependent claims.

The construction and functional characteristics of the milking units of the present invention will be more clearly comprehensible from the detailed description below, in which reference is made to the appended drawings which show a preferred and non-limiting embodiment and wherein:

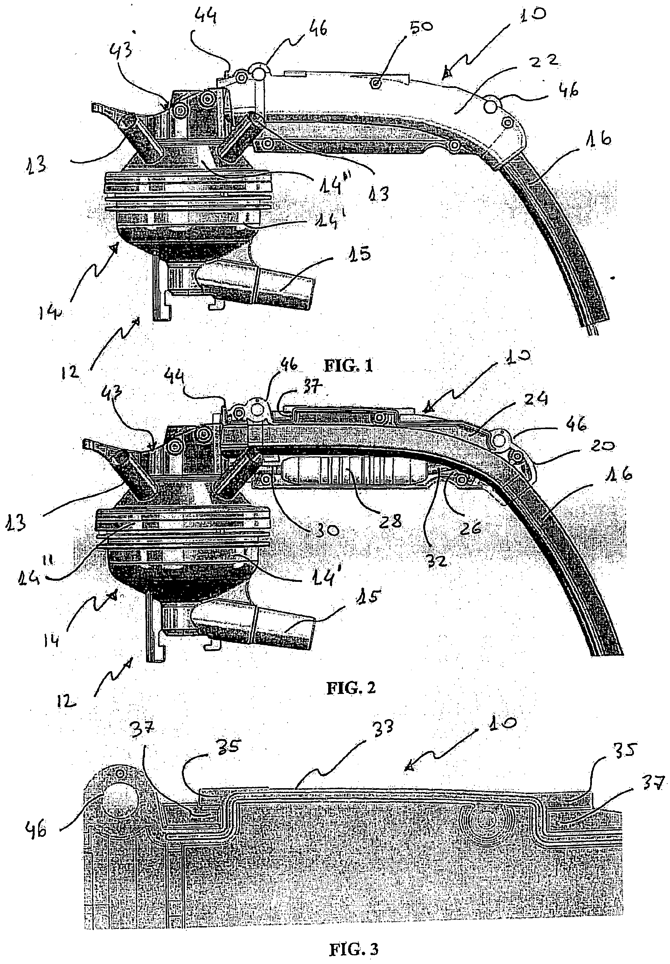

figure 1 schematically shows a side view of a milking unit provided with the gripping device according to the invention;
figure 2 schematically shows a cross-section of said gripping device of the milking unit according to the invention,
figure 3 schematically shows a detailed view of a part of the gripping device of the milking unit of the invention;

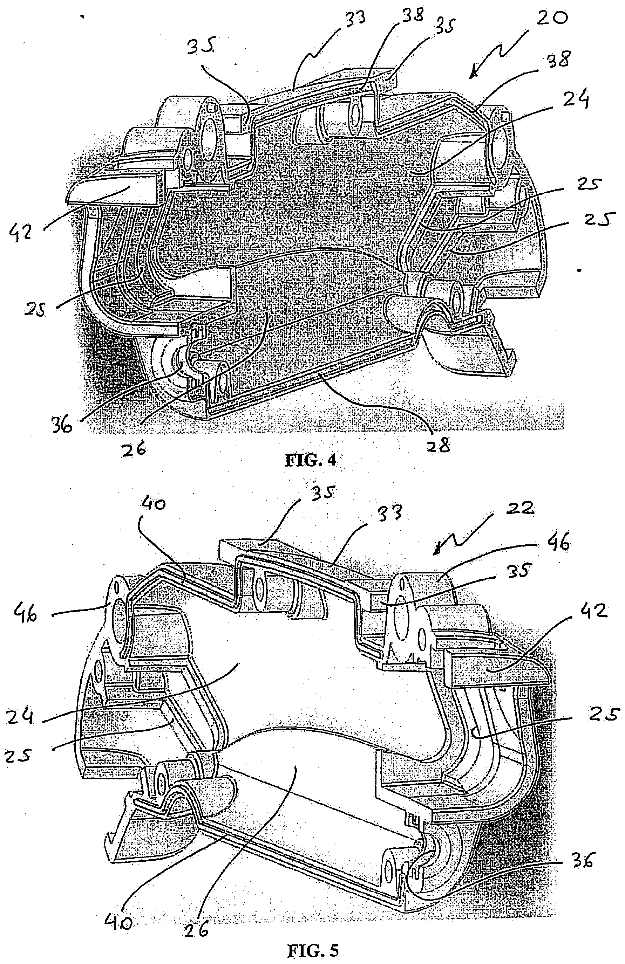

figures 4 and 5 schematically show the axonometric views of two constituent components of the device of the milking unit of the invention;

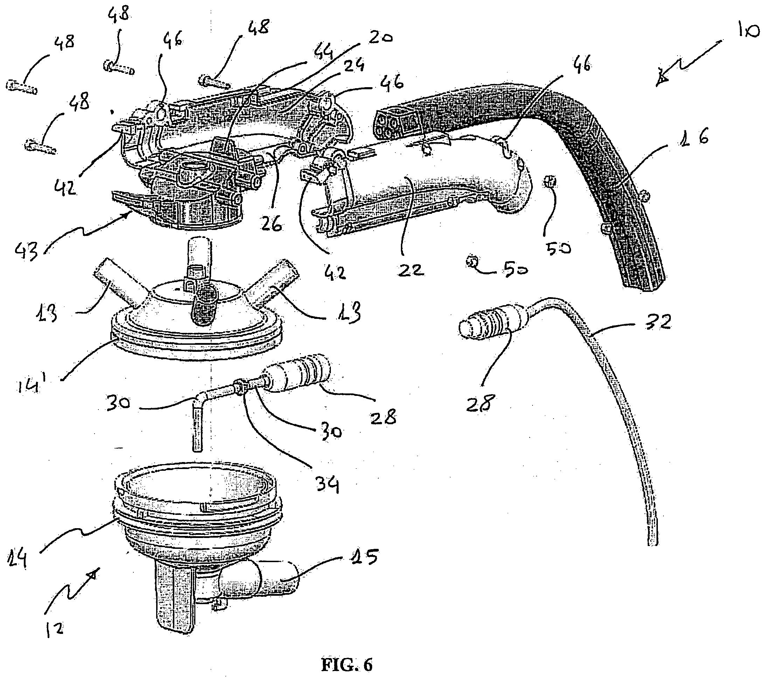

figure 6 schematically shows an exploded axonometric view of the gripping device of the milking unit according to the invention;
figure 7 schematically shows a cross-section view of said gripping device of the milking device of the invention according to an alternative embodiment configuration and utilisable for milking units with a two channel pulse tube and without signal cables for controlling the single udder quarter.

With reference to the aforementioned figures the milking unit, globally denoted by reference numeral 12, comprises a gripping device (10, 10'), by way of a non-limiting example, of the single udder quarter type which comprises a manifold 14, fitted with an output tube 15 placed on the bottom of a lower portion 14' of the manifold and needed for the connection of a duct for the collection of the drawn milk transiting in the manifold, two or four ducts 13 externally extending on the upper portion 14" of the manifold on the opposite side to that of the output tube 15 to which two or four bosses fitted with teat-cups (not shown in the drawing) are connected , a pulse tube 16 connected to the manifold 14.

The gripping device 10 of the milking unit 12 comprises, preferably but not exclusively, two half-shells 20 and 22, made of plastic or other material suited to the purpose and each defined by a single body or composed of two or more elements coupled to each other, which partially embrace the manifold 14 and the pulse tube 16, the latter by a length tendentially equal to the average dimensions of the hand of an individual dictated by ergonomic principles.

In an alternative embodiment the grip embraces the portion of pulse tube by a length tendentially equal to the average dimensions of the hand of an individual, not in a continuous manner but along one or more sections of the length of the same.

Grooved profiles are formed on the coupling surfaces between the two half-shells 20 and 22 having the function of forming labyrinth paths for the accumulation, flow and evacuation of dirt and/or liquids which may find themselves on the milking unit (not shown in the drawings).

Each of the half-shells 20, 22 is internally substantially subdivided into an upper 24 and lower portion or chamber 26, respectively suitable for receiving the portion of the pulse tube 16 starting from the hooking point thereof to the manifold 14 and a connector 28, in a single element or several elements joined to each other, the function of which is described in detail below.

The upper portion or chamber 24 has a shaped longitudinal development and a partially rectilinear pattern and partially curvilinear such as to follow the natural bending of the pulse tube 16.

The same upper portion or chamber 24 has a number of ribs 25 transversally arranged and shaped in a corresponding way to the side profile of the pulse tube 16 so as to embrace it and at the same time stabilise it inside the upper chamber.

The manifold, positioned inside the lower portion or chamber 26 has the function of enabling the connection of a first section of signal cable 30 of a sensor (sensor inside the manifold 14) and a second section of signal cable 32 of the sensor, with the first section of signal cable 30 connected to the manifold 14 and the second section of signal cable 32 coming out of said connector which enters, preferably but not exclusively, the pulse tube 16 and runs along the same as far as its point of connection to a control unit (not shown in the drawings).

The first section of signal cable 30 passes through a grommet element 34 made of plastic material and housed in a pocket 36 formed at the end of the lower portion or chamber 26 of each of the half shells 20 and 22 facing towards the manifold 14; said grommet element 34 has the function of obstructing the entrance of dirt, dust, external materials and similar into the lower portion or chamber 26.

Each of the half-shells 20, 22 in the upper part facing in the direction of the upper portion or chamber 24, has an expansion or appendix 33 extending vertically and from the ends of which two opposed and symmetrical extensions 35 extend horizontally, defining in the lower part thereof comprised between the lower front of said extensions and the upper front of the half-shell, two recesses 37 suitable for permitting, when the two half-shells 20, 22 are joined, hooking to an optional support (not shown in the drawings).

Along the external profile of the half-shell 20 a recess or cavity 38 is formed suitable for receiving a corresponding projection or lip 40 formed along the external profile of the half-shell 22; an optional gasket (not shown in the drawings) or a film of silicone or equivalent known insulating material is interposed between said recess 38 and lip 40 suitable for preventing infiltrations of dust, liquids or similar.

The end of each of the two half-shells 20, 22 facing towards the manifold 14 has a tab 42 which, starting from the upper front of the half-shell develops transversally with a length basically equal to the width or transversal dimension of the half-shell in the direction of the manifold 14.

When the two half-shells 20 and 22 are coupled around the pulse tube 16 and the manifold 14, the tabs 42 thereof embrace and surround a tab 44 extending vertically starting from the upper front of a split pin 43 attached to the upper portion 14" of the manifold 14 so as to define a release-preventing element for the manifold from the gripping device.

In addition, on the upper front of each of the two half-shells 20, 22 at least one ring 46 is formed for hooking the milking unit to an automatic release hook (not shown in the drawings) of the milking unit; in the preferred embodiment in the drawings there are two rings 46.

With particular reference to the preferred embodiment in the drawings, the two half-shells 20 and 22 are connected to each other by means of screws 48 and nuts 50 or equivalent known check means; in an alternative embodiment the connection of the two half-shells may consists of quick attachment/release elements of the snap-fit type or similar.

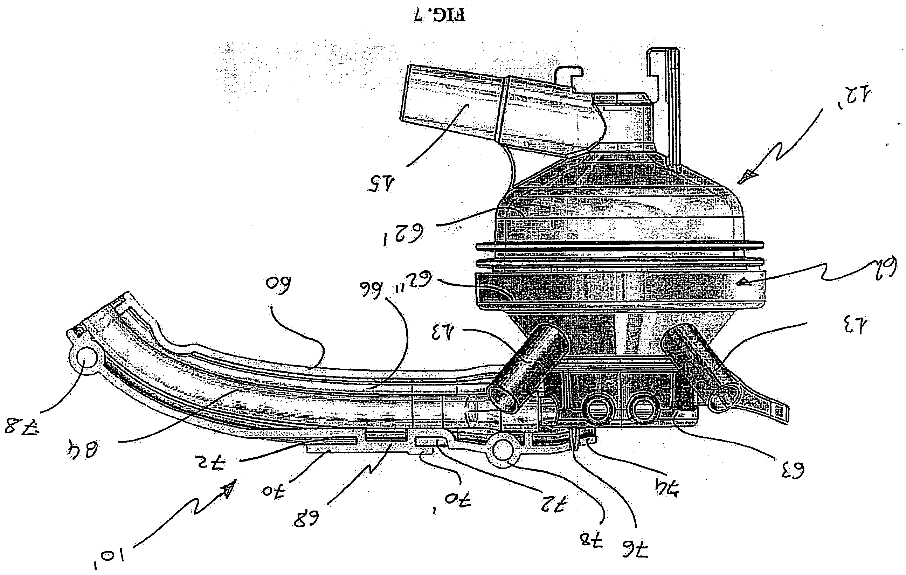

With particular reference to figure 7, an alternative embodiment of the gripping device of the milking unit according to the invention is schematised, specially adapted for application to a milking unit with a two channel pulse tube and without signal cables for control of the single udder quarter.

The gripping device, globally denoted in figure 7 by reference numeral 10', comprises two half-shells 60 (in the figure only one of said shells is shown in that the other has entirely analogous and symmetrical characteristics), made of plastic or other material suited to the purpose and each defined by a single body or composed of two or more elements coupled to each other, which partially embrace a manifold 62 (preferably comprising a lower portion 62' and an upper portion 62") of a milking unit 12' and a pulse tube 64, the latter by a length equal to the average dimensions of the hand of an individual dictated by ergonomic principles. In this case too the grip according to the invention may embrace the pulse tube along the defined section in a continuous manner or discontinuous manner along one or more sections of the grip length.

Grooved profiles are formed on the coupling surfaces between the two half-shells, as in the preferred embodiment described above, having the function of forming labyrinth paths for the accumulation, flow and evacuation of dirt and/or liquids which may find themselves on the milking unit (not shown in the drawings).

Each of the half-shells 60 comprises an inner portion or chamber 66 suitable for receiving the section of the pulse tube 64 starting from its point of attachment to the manifold 62; such inner portion or chamber 66 has a shaped longitudinal development and a partially rectilinear pattern and partially curvilinear such as to follow the natural bending of the pulse tube 64.

Each of the half-shells 60, in the upper part has an expansion or appendix 68 extending vertically and from the ends of which two opposed and symmetrical extensions 70 and 70' extend horizontally, defining in the lower part thereof comprised between the lower front of said extensions and the upper front of the half-shell, two recesses 72 suitable for permitting, when the two half-shells 60 are joined, hooking to an optional support (not shown in the drawings).

As referred to in the preferred embodiment described above, the two half-shells of the alternative embodiment may have, along the external profile a recess or cavity and a corresponding projection such as to permit the rapid and easy bringing together and stabilisation of the two half-shells with the optional interposition of a gasket so as to insulate or seal against the entrance of liquids, dust and similar impurities.

The end of each of the two half-shells 60 facing towards the manifold 62 has a tab 74 which, starting from the upper front of the half-shell extends transversally with a length basically equal to the width or transversal dimension of the half-shell in the direction of the manifold 62.

When the two half-shells 60 are coupled to each other around the pulse tube 64 and the manifold 62, the tabs 74 thereof embrace and surround a tab 76 extending vertically starting from the upper front of a split pin 67 attached to the upper portion 62" of the manifold 62 so as to define a release-preventing element for the manifold from the gripping device.

In addition, on the upper front of each of the two half-shells 60, at least one ring 78 is formed for hooking the milking unit to an automatic release hook of the milking unit (not shown in the drawings).

The two half-shells 60 are connected to each other by means of screws and nuts or equivalent known check means or by means of quick attachment/release elements of the snap-fit type or similar.

In an alternative embodiment the grip is made in a single piece.

As may be seen from the above, the advantages which the milking unit according to the invention achieves are evident.

The milking unit according to the present invention advantageously provides the operator with a milking unit such as to permit the rapid and convenient gripping and positioning thereof in relation to the udders of the animal, exploiting the possibility of a comfortable and firm grip thanks to the ergonomic nature of the grip or gripping device.

Furtherly advantageous is the fact that the presence of the gripping device makes it possible to position the milking unit without the operator having to adopt awkward and unnatural stances.

Furtherly advantageous is the fact that the gripping device of the milking unit according to the invention makes maintenance operations and component replacement easier and faster thanks to the presence of the manifold.

A further advantage is represented by the fact that by being positioned around the pulse tube the device according to the invention does not detract space from the milking unit or modify its position in relation to the udder of the animal to which said unit is attached.

Furtherly advantageous is the fact that the gripping device of the milking unit according to the invention is applied to both milking systems of the single udder quarter type and to traditional mechanised systems.

Despite the invention having been described above with particular reference to one of its embodiments, given solely by way of a non-limiting example, numerous modifications and variants will appear evident to a person skilled in the art in the light of the above description. The present invention therefore sets out to embrace all the modifications and variants which fall within the scope of the following claims.

## Claims

1. A milking unit (12, 12') comprising a manifold (14, 62), a pulse tube (16, 64), shells and teat-cups to be connected to the udder of an animal, **characterized in that** it comprises a gripping device (10, 10') applied to a terminal portion of the pulse tube (16, 64) connected to the manifold (14, 62), said device comprising gripping means for a firm, safe and ergonomic grip and means for a quick replacement and maintenance of the unit or components thereof, the gripping means comprising two half-shells (20, 22, 60) made of plastic material each one in one or more pieces, partially embracing the manifold (14, 62) and the pulse tube (16, 64), the latter by a length equal to the average dimensions of the hand of an individual in a continuous or discontinuous manner, and the means for a quick replacement and maintenance of the unit or components thereof comprising a connector (28), made in a single piece or defined by a number of elements apt to be reciprocally connected, arranged inside the two half-shells (20,22) and connected, at one end, with a first section of signal cable (30) of a sensor connected to a control unit and partially inserted in the pulse tube (16), and at the other end connected to a second section of signal cable (32) of the same sensor.

2. The milking unit (12, 12') according to claim 1, **characterised in that** each one of the two half-shells (20, 22) is internally subdivided in an upper portion or chamber (24) and in a lower portion or chamber (26), respectively apt to receive the portion of the pulse tube (16) starting from the hooking point thereof with respect to the manifold (14) and the connector (28), and that each one of the two half-shells (60) has an inner portion or chamber (66) apt to receive the portion of the pulse tube (64) starting from the hooking point thereof with respect to the manifold (62), the upper portion or chamber (24) and the inner portion or chamber (66) with shaped longitudinal development and a partially rectilinear pattern and partially curvilinear such as to follow the natural bending of the pulse tube (16, 64), the upper portion or chamber (24) being provided with a number of ribs (25) transversally arranged and shaped in a corresponding way to the side profile of the pulse tube thereof.

3. The milking unit (12, 12') as claimed in claim 2, **characterised in that** each one of the two half-shells (20, 22, 60), respectively in the upper part at the upper portion or chamber (24) and in the upper part at the inner portion or chamber (66), have an expansion or appendix (33 and 68) vertically developed from the ends thereof develop, in horizontal direction, two opposed and symmetrical extensions (35, 70, 70') defining, in the lower part thereof comprised between the lower front of said extensions and the upper front of the half-shell, two recesses (37, 72) apt to allow, when the two half-shells (20, 22) and the half-shells (60) are united, the hooking to an optional support.

4. The milking unit (12, 12') as claimed in claim 3, **characterised in that** along the external profile of the half-shell (20) is formed a recess or cavity (38) apt to receive a corresponding projection or lip (40) formed along the external profile of the half-shell (22), a gasket or a film of insulating silicone is interposed between said recess (38) and said lip (40) with the purpose to prevent infiltrations of dusts, liquids or similar.

5. The milking unit (12, 12') as claimed in claim 4, **characterised in that** it comprises, at the end of each one of the two half-shells (20, 22, 60) facing towards the manifold (14, 62), a tab (42, 74) which, starting from the upper front of each half-shell develops transversally with a length basically equal to the width or transversal dimension of the half-shell thereof, the tabs (42, 74) of the two half-shells apt to embrace and surround, when said half-shells are coupled, a tab (44, 76) vertically developed starting from the upper front of a split pin (43, 63) stabilised to an upper portion (14", 62") of the manifold (14, 62) so as to define a release-preventing element for the manifold thereof.

6. The milking unit (12, 12') as claimed in claim 5, **characterised in that** on the upper front of each of the two half-shells (20, 22, 60) is formed at least one ring (46, 78) for the hooking of the milking unit respect to an automatic release hook of the milking unit thereof.

7. The milking unit (12, 12') as claimed in claim 6, **characterised in that** it comprises a grommet element (34) made of plastic material and arranged in a pocket (36) formed at the end of the lower portion or chamber (26) facing towards the manifold (14) apt to allow the passage of the first section of signal cable (30) of the sensor and to prevent the access of dirt, dusts, external materials and similar in the lower portion or chamber (26).

8. The milking unit (12, 12') according to one or more of the previous claims, **characterised in that** it is made in a single piece.

## Patentansprüche

1. Melkeinheit (12. 12') umfassend einen Sammler (14, 62), eine Pulsröhre (16, 64), Hülsen und Zitzenbecher, welche an dem Euter eines Tieres anzuschließen sind, **dadurch gekennzeichnet, dass** sie umfasst eine Greifeinrichtung (10, 10'), welche auf einen Anschlussabschnitt der Pulsröhre (16, 64) angebracht ist, welche an den Sammler (14, 62) angeschlossen ist, wobei die Einrichtung Greifeinrichtungen Mittel für einen festen sicheren und ergonomischen Griff und Mittel für ein schnelles Ersetzen und Warten der Einheit oder Komponenten davon umfasst, wobei die Greifmittel zwei aus Kunststoff in einem oder mehreren Stücken hergestellte Halbhülsen (20, 22, 60) umfasst, die teilweise den Sammler (14, 62) und die Pulsröhre (16, 64) umschließen, letzteren um eine Länge gleich der Durchschnittsdimensionen der Hand eines Individuums in kontinuierlicher oder diskontinuierlicher Weise, und wobei die Mittel für ein schnelles Ersetzen und Warten der Einheit oder Komponenten davon einen Verbinder (28) umfasst, der in einem einzelnen Stück hergestellt ist oder durch eine Anzahl von Elementen definiert ist, welche zum gegenseitigen Anschluss geeignet ist, angeordnet innerhalb der zwei Halbhülsen (20, 22) und angeschlossen an einem Ende an einem ersten Abschnitt eines Signalkabels (30) eines Sensors, der an einer Steuereinheit angeschlossen und teilweise in die Pulsröhre (16) eingesetzt ist, und an dem anderen Ende an einem zweiten Abschnitt eines Signalkabels (32) des gleichen Sensors angeschlossen ist.

2. Melkeinheit (12, 12') nach Anspruch 1, **dadurch gekennzeichnet, dass** jede der zwei Halbhülsen (20, 22) intern in einen oberen Abschnitt oder eine obere Kammer (24) und einen unteren Abschnitt oder eine untere Kammer (26) unterteilt ist, jeweils geeignet zur Aufnahme des Abschnitts des Pulsrohres (16), beginnend von dem Einhakpunkt davon bezüglich des Sammlers (14) und des Verbinders (28), und dass jede der zwei Halbhülsen (60) einen inneren Abschnitt oder eine innere Kammer (66) aufweist, die zur Aufnahme des Abschnitts der Pulsröhre (64), beginnend von dem Einhakteil davon bezüglich des Sammlers (62) aufweist, wobei der obere Abschnitt oder die obere Kammer (24) und der innere Abschnitt oder die innere Kammer (66) mit geformter Längsentwicklung und einem teilweise rechteckigen Muster und teilweise gekrümmt ausgebildet ist, um so der
natürlichen Biegung der Pulsröhre (16, 64) zu folgen, wobei der obere Abschnitt oder die obere Kammer (24) mit einer Anzahl von Rippen (25) versehen ist, die transversal angeordnet und in einer entsprechenden Weise zu dem Seitenprofil der Pulsröhre davon geformt ist.

3. Melkeinheit (12, 12') nach Anspruch 2, **dadurch gekennzeichnet, dass** jede der zwei Halbhülsen (20, 22, 60) jeweils in dem oberen Teil des oberen Abschnitts oder der oberen Kammer (24) und in dem unteren Teil an dem inneren Abschnitt oder der inneren Kammer (66) eine Erweiterung oder
einen Anhang (33 und 68) aufweist, der sich vertikal von den Enden davon entwickeln, in horizontaler Richtung zwei gegenüberliegende und symmetrische Erweiterungen (35, 70, 70') entwickeln, die in dem unteren Teil davon zwischen der unteren Front von den Erweiterungen und der oberen Front der Halbhülse umfasst sind, wobei zwei Ausnehmungen (37, 72) geeignet sind, wenn die zwei Halbhülsen (20, 22) und die Halbhülsen (60) vereint sind, das Einhaken an einem optionalen Träger ermöglichen.

4. Melkeinheit (12, 12') nach Anspruch 3, **dadurch gekennzeichnet, dass** entlang des externen Profils der Halbhülse (20) eine Ausnehmung oder Aushöhlung (38) ausgebildet ist, die zur Aufnahme eines entsprechenden Vorsprungs oder einer entsprechenden Lippe (40) geeignet ist, die entlang des externen Profils der Halbhülse (22) ausgebildet ist, wobei eine Dichtung oder ein Film aus isolierendem Silikon zwischen die Ausnehmung (38) und die Lippe (40) zu dem Zweck zwischengelegt ist, Infiltration von Staub, Flüssigkeiten oder ähnlichem zu vermeiden.

5. Melkeinheit (12, 12') nach Anspruch 4, **dadurch gekennzeichnet, dass** sie umfasst an dem Ende von jeder der zwei Halbhülsen, welche auf den Sammler (14, 62) weisen, einen Tab (42, 74), welcher beginnend von der oberen Front von jeder Halbhülse sich transversal mit einer Länge grundlegend gleich der Breite oder transversalen Dimension der Halbhülse davon sich entwickelt, wobei die Tabs (42, 74) der zwei Halbhülsen geeignet sind, wenn die Halbhülsen gekoppelt sind, einen Tab (44, 76) zu umgeben und zu umschließen, der sich vertikal beginnend von der oberen Front eines geteilten Stiftes (43, 63) entwickelt, der an einem oberen Abschnitt (14", 62") des Sammlers (14, 62) angebracht ist, um so ein Freisetzung verhinderndes Element für den Sammler davon zu bilden.

6. Melkeinheit (12, 12') nach Anspruch 5, **dadurch gekennzeichnet, dass** auf der oberen Front von jeder der zwei Halbhülsen (20, 22, 60) zumindest ein Ring (46, 78) für das Einhaken der Melkeinheit bezüglich eines automatischen Freisetzungshakens der Melkeinheit davon ausgebildet ist.

7. Melkeinheit (12, 12') nach Anspruch 6, **dadurch gekennzeichnet, dass** sie ein Ösenelement (34) umfasst, welches aus Kunststoffmaterial hergestellt ist und in einer Tasche (36) angeordnet ist, die an dem Ende des unteren Abschnitts oder der unteren Kammer (26) ausgebildet ist, die auf den Sammler (14) weist, geeignet, um den Durchtritt des ersten Abschnitts des Signalkabels (30) des Sensors zu ermöglichen und den Eintritt von Schmutz, Staub, externen Materialien und dergleichen in den untersten Abschnitt oder die unterste Kammer (26) zu vermeiden.

8. Melkeinheit (12, 12') nach einem oder mehreren der vorhergehenden Ansprüche, **dadurch gekennzeichnet, dass** sie in einem einzelnen Stück hergestellt ist.

## Revendications

1. Unité de traite (12, 12') comprenant un collecteur (14, 62), un tube de pulsation (16, 64), des coques et des gobelets trayeurs devant être reliés au pis d'un animal, **caractérisée en ce qu'**elle comprend un dispositif de préhension (10, 10') appliqué à une partie terminale du tube de pulsation (16, 64) relié au collecteur (14, 62), ledit dispositif comprenant des moyens de préhension pour une préhension ferme, sûre et ergonomique et des moyens pour le remplacement rapide et l'entretien de l'unité ou de ses composants, les moyens de préhension comprenant deux demi-coques (20, 22, 60) constituées chacune de matière plastique en un ou plusieurs morceaux, englobant partiellement le collecteur (14, 62) et le tube de pulsation (16, 64), le dernier sur une longueur égale aux dimensions moyennes de la main d'un individu d'une manière continue ou discontinue, et les moyens pour le remplacement rapide et l'entretien de l'unité ou de ses composants comprenant un raccord (28), constitué d'une seule pièce ou défini par un certain nombre d'éléments aptes à être reliés de manière réciproque, agencés à l'intérieur des deux demi-coques (20, 22) et reliés, à une extrémité, à une première section de câble de signalisation (30) d'un capteur reliée à une unité de commande et insérée partiellement dans le tube de pulsation (16), et à l'autre extrémité, relié à une seconde section de câble de signalisation (32) du même capteur.

2. Unité de traite (12, 12') selon la revendication 1, **caractérisée en ce que** chacune des deux demi-coques (20, 22) est subdivisée intérieurement en une partie supérieure ou chambre (24) et en une partie inférieure ou chambre (26), respectivement aptes à recevoir la partie du tube de pulsation (16) partant du point d'accrochage de celui-ci par rapport au collecteur (14) et le raccord (28), et **en ce que** chacune des deux demi-coques (60) possède une partie interne ou chambre (66) apte à recevoir la partie du tube de pulsation (64) partant du point d'accrochage de celui-ci par rapport au collecteur (62), la partie supérieure ou chambre (24) et la partie interne ou chambre (66) ayant un développement longitudinal façonné et une configuration partiellement rectiligne et partiellement curviligne de manière à suivre la courbure naturelle du tube de pulsation (16, 64), la partie supérieure ou chambre (24) étant pourvue d'un certain nombre de nervures (25) agencées et façonnées transversalement d'une manière correspondante au profil latéral de son tube de pulsation.

3. Unité de traite (12, 12') selon la revendication 2, **caractérisée en ce que** chacune des deux demi-coques (20, 22, 60), respectivement dans la partie supérieure au niveau de la partie supérieure ou chambre (24) et dans la partie supérieure au niveau de la partie interne ou chambre (66), présente une expansion ou un appendice (33 et 68) développé(e) verticalement à partir de ses extrémités, dans la direction horizontale, deux extensions opposées et symétriques (35, 70, 70') définissant, dans leur partie inférieure comprise entre la partie avant inférieure desdites extensions et la partie avant supérieure de la demi-coque, deux évidements (37, 72) aptes à permettre, lorsque les deux demi-coques (20, 22) et les demi-coques (60) sont unies, l'accrochage à un support éventuel.

4. Unité de traite (12, 12') selon la revendication 3, **caractérisée en ce que**, le long du profil externe de la demi-coque (20), est formé un évidement ou une cavité (38) apte à recevoir une projection ou lèvre (40) correspondante formée le long du profil externe de la demi-coque (22), un joint plat ou un film de silicone isolant intercalé entre ledit évidement (38) et ladite lèvre (40) aux fins d'empêcher des infiltrations de poussières, liquides ou similaires.

5. Unité de traite (12, 12') selon la revendication 4, **caractérisée en ce qu'**elle comprend, à l'extrémité de chacune des deux demi-coques (20, 22, 60) faisant face au collecteur (14, 62), une languette (42, 74) qui, en partant de la partie avant supérieure de chaque demi-coque, se développe transversalement sur une longueur en principe égale à la largeur ou dimension transversale de sa demi-coque, les languettes (42, 74) des deux demi-coques étant aptes à englober et entourer, lorsque lesdites demi-coques sont couplées, une languette (44, 76) développée verticalement en partant de la partie avant supérieure d'une goupille fendue (43, 63) stabilisée sur une partie supérieure (14", 62") du collecteur (14, 62) de sorte à définir un élément empêchant la libération pour le collecteur correspondant.

6. Unité de traite (12, 12') selon la revendication 5, **caractérisée en ce que**, sur la partie avant supérieure de chacune des deux demi-coques (20, 22, 60) est formé au moins un anneau (46, 78) pour l'accrochage de l'unité de traite à un crochet de libération automatique de l'unité de traite correspondante.

7. Unité de traite (12, 12') selon la revendication 6, **caractérisée en ce qu'**elle comprend un élément formant oeillet (34) constitué de matière plastique et disposé dans une poche (36) formée à l'extrémité de la partie inférieure ou chambre (26) faisant face au collecteur (14) apte à permettre le passage de la première section de câble de signalisation (30) du capteur et à empêcher l'accès de saletés, poussières, matières externes et similaires dans la partie inférieure ou chambre (26).

8. Unité de traite (12, 12') selon une ou plusieurs des revendications précédentes, **caractérisée en ce qu'**elle est constituée d'une seule pièce.
